# EUROPEAN PATENT APPLICATION

(11) **EP 4 825 572 A1**
(43) Date of publication of application: **21.10.2026**
(21) Application number: 24903735.9
(22) Date of filing: 11.12.2024
(51) Int. Cl.: B30B 15/00, B21D 22/20

(54) **MOLDING SYSTEM**

(30) Priority: 13.12.2023 JP 2023209984
(71) Applicant: Sumitomo Heavy Industries, Ltd., Tokyo 141-6025 (JP)
(72) Inventor: KOUYAMA, Eiji, Niihama-shi, Ehime 792-8588 (JP)
(74) Representative: Louis Pöhlau Lohrentz
(86) International application number: PCT/JP2024/043898
(87) International publication number: WO 2025/127082

(57) **Abstract**

The forming system includes a power supply unit that supplies power for heating a metal material. The power supply unit includes a power storage unit that stores the power. Therefore, the power supply unit can store the power in the power storage unit regardless of a timing at which the power is required for heating the metal material. Therefore, the power storage unit can supply a large amount of power at a required timing. Therefore, the power supply unit supplements the power from the power storage unit at a timing at which the peak of the power to be supplied is generated. Accordingly, at the timing at which the peak of the power to be supplied is generated, the power consumption of the commercial power supply can be suppressed, or the power consumption can be made to be zero. As described above, an increase in power consumption can be suppressed.

## Description

### Technical Field

The present disclosure relates to a forming system.

### Background Art

In the related art, a forming system disclosed in PTL 1 is known. In this forming system, a metal material is heated, and the heated metal material is expanded and formed.

### Citation List

### Patent Literature

[PTL 1] Japanese Unexamined Patent Publication No. 2009-220141

### Summary of Invention

### Technical Problem

In the forming system in PTL 1 described above, electric heating is performed by causing a large current to flow through the metal material. Here, in a case where the metal material is heated to a high temperature by the electric heating in a short time, a large peak of commercial power is generated. In this case, a problem of an increase in capacity of a commercial power supply occurs, or a problem of being restricted by an electric power company due to an influence of a voltage drop occurs.

An aspect of the present disclosure has been made in order to solve such a problem, and an object of the present disclosure is to provide a forming system capable of suppressing an increase in power consumption.

### Solution to Problem

A forming system according to an aspect of the present disclosure includes a forming unit that forms a metal material that has been heated, and a power supply unit that supplies power for heating the metal material, in which the power supply unit includes a power storage unit that stores the power, and the power supply unit supplements the power from the power storage unit at a timing at which a peak of the power to be supplied is generated.

The forming system includes a power supply unit that supplies power for heating a metal material. The power supply unit includes a power storage unit that stores the power. Therefore, the power supply unit can store the power in the power storage unit regardless of a timing at which the power is required for heating the metal material. Therefore, the power storage unit can supply a large amount of power at a required timing. Therefore, the power supply unit supplements the power from the power storage unit at the timing at which the peak of the power to be supplied is generated. Accordingly, at the timing at which the peak of the power to be supplied is generated, the power consumption of the commercial power supply can be suppressed, or the power consumption can be made to be zero. As described above, an increase in power consumption can be suppressed.

The forming system may further include an electric heating unit that electrically heats the metal material, in which the power supply unit may store the power in the power storage unit at a timing at which the electric heating unit does not perform the electric heating, and may supply the power from the power storage unit to the electric heating unit at a timing at which the electric heating unit performs the electric heating. Accordingly, the power supply unit can store the power in the power storage unit for a long time during which a process other than the electric heating is performed. Then, the power storage unit can supplement the power at the timing at which the large amount of power is required for the electric heating.

The power supply unit may store the power in the power storage unit to average power consumption of a commercial power supply. In this case, when the power is stored in the power storage unit, the power consumption of the commercial power supply can be suppressed from being locally increased.

The power supply unit may have a switch between a commercial power supply and the power storage unit, and may store the power in the power storage unit at a timing at which the switch is turned on. In this case, the timing at which the power is stored in the power storage unit can be controlled by using the switch.

The switch may be disposed in a power supply device. In this case, when the forming system according to the present disclosure is introduced into an existing forming system, the forming system including the switch can be constructed only by replacing the power supply device.

A forming system includes a forming unit that forms a metal material that has been heated, and a power supply unit that supplies power for heating the metal material, in which the power supply unit includes a power storage unit that stores the power, and the power supply unit supplements the power from the power storage unit such that power consumption of a commercial power supply is equal to or less than a limit value designated by an electric power company or a value based on a limit value of a power supply facility capacity of an installation factory.

The forming system includes a power supply unit that supplies power for heating a metal material. The power supply unit includes a power storage unit that stores the power. Therefore, the power supply unit can store the power in the power storage unit regardless of a timing at which the power is required for heating the metal material. Therefore, the power storage unit can supply a large amount of power at a required timing. Therefore, the power supply unit supplements the power from the power storage unit such that power consumption of a commercial power supply is equal to or less than a limit value designated by an electric power company or a value based on a limit value of a power supply facility capacity of an installation factory. Accordingly, even at a timing at which a large amount of power is required, the power consumption can be suppressed to be equal to or less than the limit value by using the power of the power storage unit. As described above, an increase in power consumption can be suppressed.

### Advantageous Effects of Invention

According to an aspect of the present disclosure, it is possible to provide a forming system capable of suppressing an increase in power consumption.

### Brief Description of Drawings

FIG. 1 is a block diagram showing a configuration of a forming system according to an embodiment of the present disclosure.
FIG. 2 is a schematic configuration diagram showing a specific example of the forming system shown in FIG. 1.
FIG. 3 is a schematic configuration diagram of a power supply unit.
FIG. 4 is a graph showing power consumption and the like.
FIG. 5 is a graph showing power consumption and the like.
FIG. 6 is a schematic configuration diagram of a power supply unit of a forming system according to a modification example.

### Description of Embodiments

Hereinafter, a preferred embodiment of the present disclosure will be described with reference to the accompanying drawings. In each drawing, identical or corresponding portions are denoted by the same reference numerals, and overlapping description is omitted.

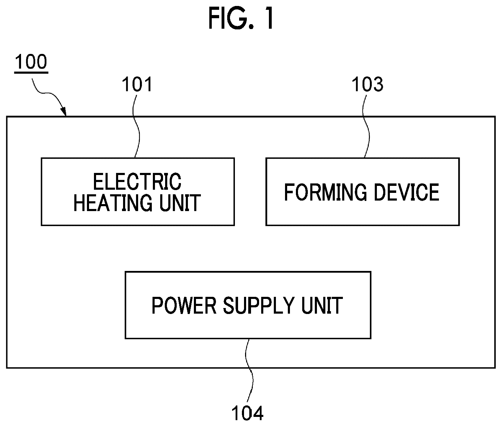

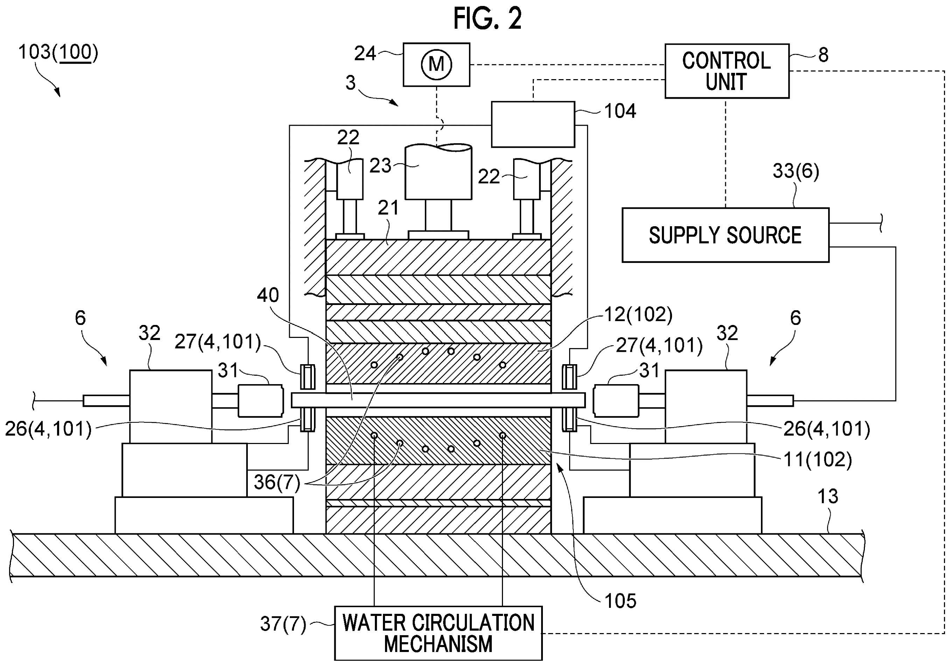

FIG. 1 is a block diagram showing a configuration of a forming system 100 according to the present embodiment. In addition, FIG. 2 is a schematic configuration diagram showing a specific example of the forming system 100 shown in FIG. 1.

The forming system 100 is a system that manufactures a formed product by heating a metal material and forming the heated metal material in a forming die. As the metal material, a pipe-shaped metal pipe material 40 as shown in FIG. 2 is adopted. As the metal material, for example, a carbon steel material, an MnB steel material having improved hardenability, or the like is used.

As shown in FIG. 1, the forming system 100 includes an electric heating unit 101, a forming device 103 (forming unit), and a power supply unit 104.

The electric heating unit 101 causes a current to flow through the metal material to heat the metal material. The electric heating unit 101 includes an electrode for causing a current to flow by coming into contact with the metal material. The power supply unit 104 includes a power supply that causes a current to flow to the electrode of the electric heating unit 101. Accordingly, due to an electric resistance of the metal material itself, the metal material itself generates heat by Joule heating (electric heating). The forming device 103 is a device that forms the metal material heated by the electric heating unit 101 in a forming die 102.

For example, as the forming device 103, a configuration shown in FIG. 2 may be used. The forming device 103 shown in FIG. 2 is a device that performs forming and quenching by supplying a fluid to the heated metal pipe material 40 and bringing the fluid into contact with a forming surface of the forming die. The forming device 103 includes the electric heating unit 101.

As shown in FIG. 2, the forming device 103 is a device that forms the metal pipe having a hollow shape by blow forming. Here, the forming device 103 is installed on a horizontal plane. The forming device 103 includes the forming die 102, a drive mechanism 3, a holding unit 4, the electric heating unit 101, a fluid supply unit 6, a cooling unit 7, and a control unit 8. In the present specification, a metal pipe material 40 refers to a hollow article before the completion of the forming by the forming device 103. The metal pipe material 40 is a steel-type pipe material that can be quenched. Further, in a horizontal direction, a direction in which the metal pipe material 40 extends during the forming may be referred to as a "longitudinal direction", and a direction perpendicular to the longitudinal direction may be referred to as a "width direction".

The forming die 102 is a die that forms the metal pipe from the metal pipe material 40, and includes a lower die 11 and an upper die 12 that face each other in an up-down direction. The lower die 11 and the upper die 12 are made of steel blocks. Each of the lower die 11 and the upper die 12 is provided with a recessed portion in which the metal pipe material 40 is accommodated. In a state where the lower die 11 and the upper die 12 are in close contact with each other (die closed state), the respective recessed portions form a space having a target shape in which the metal pipe material is to be formed. Therefore, the surfaces of the respective recessed portions are forming surfaces of the forming die 102. The lower die 11 is fixed to a base stage 13 via a die holder or the like. The upper die 12 is fixed to a slide of the drive mechanism 3 via a die holder or the like.

The drive mechanism 3 is a mechanism that moves at least one of the lower die 11 and the upper die 12. In FIG. 2, the drive mechanism 3 has a configuration in which only the upper die 12 is moved. The drive mechanism 3 includes a slide 21 that moves the upper die 12 such that the lower die 11 and the upper die 12 are joined together, and a pull-back cylinder 22 serving as an actuator that generates a force for pulling the slide 21 upward, a main cylinder 23 serving as a drive source that downward-pressurizes the slide 21, and a drive source 24 that applies a driving force to the main cylinder 23.

The holding unit 4 is a mechanism that holds the metal pipe material 40 disposed between the lower die 11 and the upper die 12. The holding unit 4 includes a lower electrode 26 and an upper electrode 27 that hold the metal pipe material 40 on one end side in the longitudinal direction of the forming die 102, and a lower electrode 26 and an upper electrode 27 that hold the metal pipe material 40 on the other end side in the longitudinal direction of the forming die 102. The lower electrodes 26 and the upper electrodes 27 on both sides in the longitudinal direction hold the metal pipe material 40 by interposing vicinities of end portions of the metal pipe material 40 from the up-down direction. Upper surfaces of the lower electrodes 26 and lower surfaces of the upper electrodes 27 are formed with groove portions having a shape corresponding to an outer peripheral surface of the metal pipe material 40. Drive mechanisms (not shown) are provided in the lower electrodes 26 and the upper electrodes 27 and are movable independently of each other in the up-down direction.

The electric heating unit 101 heats the metal pipe material 40. The electric heating unit 101 is a mechanism that heats the metal pipe material 40 by energizing the metal pipe material 40. The electric heating unit 101 heats the metal pipe material 40 in a state in which the metal pipe material 40 is spaced apart from the lower die 11 and the upper die 12 between the lower die 11 and the upper die 12. The electric heating unit 101 includes the lower electrode 26 and the upper electrode 27 on both sides in the longitudinal direction described above. The electric heating unit 101 performs electric heating by the power supplied from the power supply unit 104.

Here, a state where the metal pipe material 40 is disposed inside the forming die 102 is a state where the metal pipe material 40 is disposed in a space between the upper die 12 and the lower die 11 with respect to the upper die 12 and the lower die 11 facing each other. In such a state, the metal pipe material 40 faces the upper die 12 in a state of being spaced downward with respect to the upper die 12, and faces the lower die 11 in a state of being spaced upward with respect to the lower die 11.

The fluid supply unit 6 is a mechanism that supplies a high-pressure fluid into the metal pipe material 40 held between the lower die 11 and the upper die 12. The fluid supply unit 6 supplies the high-pressure fluid into the metal pipe material 40 that is brought into a high-temperature state by being heated by the electric heating unit 101, to expand the metal pipe material 40. The fluid supply unit 6 is provided on both end sides of the forming die 102 in the longitudinal direction. The fluid supply unit 6 includes a nozzle 31 that supplies the fluid from an opening portion of an end portion of the metal pipe material 40 to an inside of the metal pipe material 40, a drive mechanism 32 that causes the nozzle 31 to advance and retreat with respect to the opening portion of the metal pipe material 40, and a supply source 33 that supplies the high-pressure fluid into the metal pipe material 40 via the nozzle 31. The drive mechanism 32 brings the nozzle 31 into close contact with the end portion of the metal pipe material 40 in a state where sealing performance is secured during the fluid supply and exhaust, and causes the nozzle 31 to be spaced apart from the end portion of the metal pipe material 40 in other cases. The fluid supply unit 6 may supply a gas such as high-pressure air and an inert gas, as the fluid. Additionally, the fluid supply unit 6 may include the electric heating unit 101 together with the holding unit 4 having a mechanism that moves the metal pipe material 40 in the vertical direction as the same device.

The cooling unit 7 is a mechanism that cools the forming die 102. By cooling the forming die 102, the cooling unit 7 can rapidly cool the metal pipe material 40 when the expanded metal pipe material 40 has come into contact with the forming surface of the forming die 102. The cooling unit 7 includes a flow path 36 formed inside the lower die 11 and the upper die 12, and a water circulation mechanism 37 that supplies and circulates cooling water to the flow path 36.

As described above, the quenching mechanism 105 that performs the quenching on the formed product 140 is provided in the forming die 102. The quenching mechanism 105 is formed by the forming surface of the forming die 102 and the cooling unit 7.

The control unit 8 is a device that controls the entire forming device 103. The control unit 8 controls the drive mechanism 3, the holding unit 4, the electric heating unit 101, the fluid supply unit 6, and the cooling unit 7. The control unit 8 repeatedly performs the operation of forming the metal pipe material 40 using the forming die 102.

The control unit 8 closes the forming die 102 by controlling the drive mechanism 3 to lower the upper die 12 and bring the upper die 12 close to the lower die 11. Meanwhile, the control unit 8 controls the fluid supply unit 6 to seal the opening portions of both ends of the metal pipe material 40 with the nozzle 31 and supply the fluid. Accordingly, the metal pipe material 40 softened by heating expands and comes into contact with the forming surface of the forming die 102. Then, the metal pipe material 40 is formed so as to follow a shape of the forming surface of the forming die 102. In addition, in a case where a metal pipe with a flange is formed, a part of the metal pipe material 40 is made to enter a gap between the lower die 11 and the upper die 12, and then die closing is further performed to crush the entering part to form a flange portion. When the metal pipe material 40 comes into contact with the forming surface, quenching of the metal pipe material 40 is performed by being rapidly cooled with the forming die 102 cooled by the cooling unit 7.

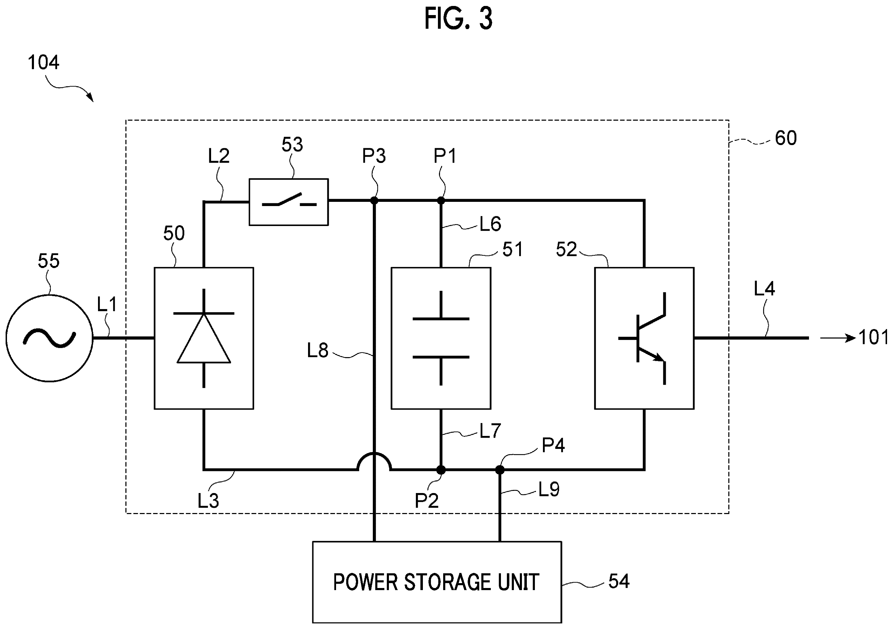

Next, a detailed configuration of the power supply unit 104 will be described with reference to FIG. 3. The power supply unit 104 supplies power for heating (electric heating) the metal pipe material 40. The power supply unit 104 converts an alternating current voltage of a commercial power supply 55 into a direct current voltage by rectifying and smoothing the alternating current voltage, and switches the direct current voltage to apply the direct current voltage to the metal pipe material 40 of the electric heating unit 101.

As shown in FIG. 3, the power supply unit 104 includes a rectifier 50, a smoothing circuit 51, a transistor 52, a switch 53, and a power storage unit 54. The power supply unit 104 has lines L1 to L9. The line L1 connects the commercial power supply 55 and the rectifier 50. The lines L2 and L3 connect the rectifier 50 and the transistor 52. The line L2 is a line on the positive electrode side, and the line L3 is a line on the negative electrode side. The line L4 supplies power from the transistor 52 to the electric heating unit 101. The line L6 branches from the line L2 at a branch point P1 and connects to the smoothing circuit 51. The line L7 branches from the line L3 at a branch point P2 and connects to the smoothing circuit 51. The line L8 branches from the line L2 at a branch point P3 and connects to the power storage unit 54. The branch point P3 is set between the rectifier 50 and the branch point P1. The line L9 branches from the line L3 at a branch point P4 and connects to the power storage unit 54. The branch point P4 is set between the branch point P2 and the transistor 52.

The rectifier 50 is a device that converts an alternating current voltage of the commercial power supply 55 into a direct current voltage. The rectifier 50 includes, for example, a diode bridge. The smoothing circuit 51 is a device that removes ripples or noise included in the rectified direct current voltage and smoothes the direct current voltage. The smoothing circuit 51 includes, for example, a capacitor. The transistor 52 is a device that adjusts a voltage. The transistor 52 controls the voltage applied to the metal pipe material 40 by switching on and off the voltage at a high speed. The transistor 52 includes, for example, an IGBT.

The power storage unit 54 is a device that stores power. The power storage unit 54 is connected in parallel to the smoothing circuit 51, so that the electric storage capacity of the smoothing circuit 51 can be increased. The power storage unit 54 can supply the stored power at a required timing. As the power storage unit 54, for example, a high-capacity capacitor or the like may be adopted.

The switch 53 is a device that cuts off commercial power during the electric heating and performs voltage control during the power storage. The switch 53 is provided on the primary side of the smoothing circuit 51. As the switch 53, for example, a thyristor may be adopted. When the thyristor of the switch 53 is turned on, the duty is controlled by switching at a high speed, and the voltage of the power stored in the power storage unit 54 is controlled.

In the example shown in FIG. 3, the power supply unit 104 includes a power supply device 60 and a power storage unit 54. The rectifier 50, the smoothing circuit 51, the transistor 52, and the switch 53 are disposed in the power supply device 60. However, the power storage unit 54 may also be disposed in the power supply device 60.

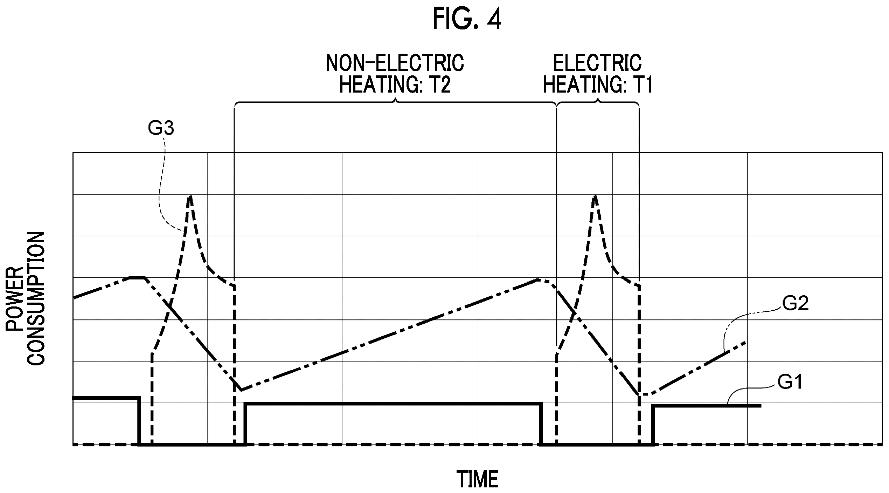

Next, the operation of the power supply unit 104 will be described with reference to FIG. 4. FIG. 4 is a graph showing the power consumption and the like in the electric heating of the forming system 100. A graph G1 in FIG. 4 shows the power consumption of the commercial power supply 55. A graph G2 in FIG. 4 shows the smoothing circuit voltage of the smoothing circuit 51. A graph G3 in FIG. 4 shows the power consumption of the commercial power supply 55 of the forming system according to the comparative example. The power supply unit of the forming system according to the comparative example does not include the switch 53 and the power storage unit 54. The forming system 100 has a timing T1 at which the electric heating unit 101 performs the electric heating of the metal pipe material 40 and a timing T2 at which the electric heating is not performed. As shown in the graph G3, in the forming system according to the comparative example, a large peak of the power consumption is generated at the timing T1 at which the electric heating is performed.

The power supply unit 104 supplements the power from the power storage unit 54 at a timing at which the peak of the power to be supplied is generated. The peak of the power to be supplied by the power supply unit 104 is generated at the timing T1 at which the electric heating is performed. Therefore, the power supply unit 104 supplies the power from the power storage unit 54 to the electric heating unit 101 at the timing T1 at which the electric heating is performed by the electric heating unit 101. In addition, the power supply unit 104 stores the power in the power storage unit 54 at the timing T2 at which the electric heating is not performed by the electric heating unit 101.

The power supply unit 104 stores the power in the power storage unit 54 to average the power consumption of the commercial power supply 55. Specifically, the power supply unit 104 stores the power in the power storage unit 54 at a timing at which the switch 53 is turned on. By switching the switch 53 at a high speed, the voltage applied to the power storage unit 54 can be controlled, and the switch 53 can make the power stored in the power storage unit 54 constant at a predetermined power value. Therefore, as shown in the graph G1 of FIG. 4, the power consumption is constant at the timing T2 at which the electric heating is not performed and the power is stored. In this way, the switch 53 can average the power consumption of the commercial power supply 55 when the power is stored in the power storage unit 54.

The power supply unit 104 turns off the switch 53 at the timing T1 at which the electric heating is performed, that is, at a timing at which the power of the power storage unit 54 is supplied to the electric heating unit 101. In this case, the switch 53 cuts off the power supply from the commercial power supply 55 to the power storage unit 54. As a result, as shown in the graph G1, the power consumption of the commercial power supply 55 is 0 at the timing T1 of the electric heating.

By the above-described operation, as shown in the graph G2 of FIG. 4, the smoothing circuit voltage gradually increases at the timing T2 at which the electric heating is not performed. In addition, at the timing T1 at which the electric heating is performed, the power of the power storage unit 54 and the smoothing circuit 51 is used, so that the smoothing circuit voltage rapidly decreases.

The power supply unit 104 may supplement the power from the power storage unit 54 such that the power consumption of the commercial power supply 55 falls within a desired range. For example, the power supply unit 104 may supplement the power from the power storage unit 54 such that the power consumption of the commercial power supply 55 is equal to or less than a value based on a limit value designated by an electric power company. For example, in a case where a factory using the forming system 100 is restricted in use due to the influence of a voltage drop in a system voltage supplied by the electric power company, it is necessary to suppress the power consumption to be equal to or less than a limit value designated by the electric power company. In this case, the power supply unit 104 suppresses the power consumption to be equal to or less than the limit value or equal to or less than an upper limit value set based on the limit value. In addition, even in a case where the power consumption is not restricted by the electric power company, there is a limit value that is generated due to insufficient capacity of a power supply facility of an installation factory in which the present system is installed. The power supply unit 104 suppresses the power consumption to be equal to or less than the limit value or equal to or less than an upper limit value set based on the limit value.

Next, the operations and effects of the forming system 100 according to the present embodiment will be described.

The forming system 100 includes the power supply unit 104 that supplies power for heating (electric heating) the metal pipe material 40. The power supply unit 104 includes the power storage unit 54 that stores the power. Therefore, the power supply unit 104 can store the power in the power storage unit 54 regardless of a timing at which the power is required for heating the metal pipe material 40. Therefore, the power storage unit 54 can supply a large amount of power at a required timing. Therefore, the power supply unit 104 supplements the power from the power storage unit 54 at a timing at which a peak of the power to be supplied is generated. Accordingly, at the timing at which the peak of the power to be supplied is generated, the power consumption of the commercial power supply can be suppressed, or the power consumption can be made to be zero. As described above, an increase in power consumption can be suppressed.

The forming system 100 may further include the electric heating unit 101 that performs the electric heating on the metal pipe material 40, and the power supply unit 104 may store the power in the power storage unit 54 at a timing T2 at which the electric heating is not performed by the electric heating unit 101, and may supply the power from the power storage unit 54 to the electric heating unit 101 at a timing T1 at which the electric heating is performed by the electric heating unit 101. Accordingly, the power supply unit 104 can store the power in the power storage unit 54 for a long time during which a process other than the electric heating is performed. Then, the power storage unit 54 can supplement the power at the timing T1 at which a large amount of power is required for the electric heating.

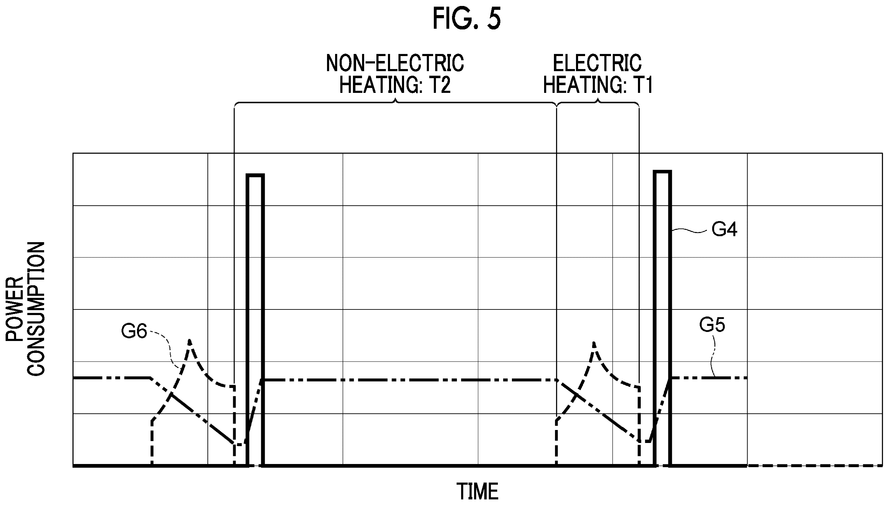

The power supply unit 104 may store the power in the power storage unit 54 to average the power consumption of the commercial power supply 55. In this case, it is possible to suppress a local increase in the power consumption of the commercial power supply 55 when the power is stored in the power storage unit 54. For example, a graph G4 in FIG. 5 shows the power consumption of the commercial power supply 55 in a case where the switch 53 does not average the power consumption. A graph G5 in FIG. 5 shows the smoothing circuit voltage of the smoothing circuit 51 at that time. A graph G6 in FIG. 5 shows the power consumption of the commercial power supply 55 of the forming system according to the comparative example. As shown in the graph G4, once the power storage in the power storage unit 54 is started, the power consumption rapidly increases, and the power storage in the power storage unit 54 is immediately completed. In this case, the power consumption is instantaneously increased. In contrast, the switch 53 averages the power consumption, so that it is possible to suppress a local increase in the power consumption as shown in the graph G in FIG. 4.

The power supply unit 104 may have the switch 53 between the commercial power supply 55 and the power storage unit 54, and may store the power in the power storage unit 54 at a timing at which the switch 53 is turned on. In this case, it is possible to control the timing at which the power is stored in the power storage unit 54 by the switch 53.

The switch 53 may be disposed in the power supply device 60. In this case, when the forming system 100 according to the present embodiment is introduced into an existing forming system, the forming system 100 including the switch 53 can be constructed only by replacing the power supply device 60.

A forming system includes a forming unit that forms a heated metal material, and a power supply unit that supplies power for heating (electric heating) a metal pipe material 40, in which the power supply unit has a power storage unit that stores the power, and the power supply unit supplements the power from the power storage unit such that power consumption of a commercial power supply is equal to or less than a value based on a limit value designated by an electric power company or a value based on a limit value generated from a power supply facility capacity of an installation factory.

The forming system 100 includes the power supply unit 104 that supplies power for heating (electric heating) the metal pipe material 40. The power supply unit 104 includes the power storage unit 54 that stores the power. Therefore, the power supply unit 104 can store the power in the power storage unit 54 regardless of a timing at which the power is required for heating the metal pipe material 40. Therefore, the power storage unit 54 can supply a large amount of power at a required timing. Therefore, the power supply unit 104 supplements the power from the power storage unit 54 such that the power consumption of the commercial power supply 55 is equal to or less than a value based on a limit value designated by the electric power company or a value based on a limit value generated from the power supply facility capacity of the installation factory. Accordingly, even at a timing at which a large amount of power is required, the power consumption can be made equal to or less than the limit value by using the power of the power storage unit 54. As described above, an increase in power consumption can be suppressed.

The present disclosure is not limited to the above embodiment.

For example, the forming device of FIG. 2 is merely an example, and the forming device may have any configuration without departing from the gist of the present disclosure.

For example, the electric heating unit 101 may not be incorporated in the forming device 103, and the metal pipe material 40 may be heated outside the forming die, and the heated metal pipe material 40 may be put into the forming die.

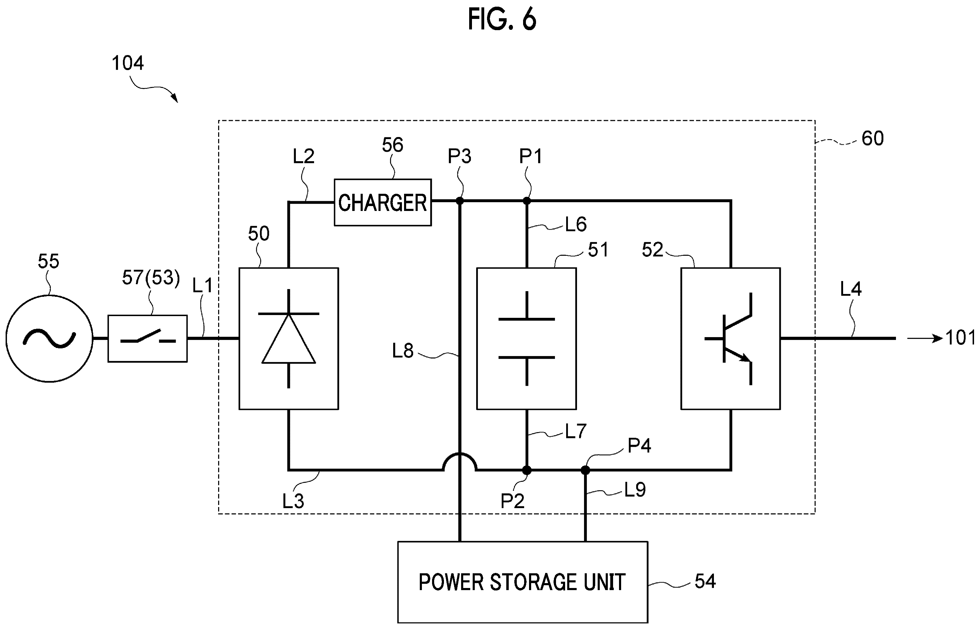

In addition, the configuration of the power supply unit 104 is not limited to that shown in FIG. 3. For example, the power supply unit 104 shown in FIG. 6 may be adopted. The power supply unit 104 shown in FIG. 6 has a switch 53, that is, a switching device 57, on the primary side (between the commercial power supply 55 and the rectifier 50) of the rectifier 50. Accordingly, the switching device 57 can cut the commercial power supply 55 at the timing T1 of the electric heating. In this case, the power supply unit 104 has a charger 56 for controlling the amount of power stored in the power storage unit 54. The charger 56 is provided on the primary side of the smoothing circuit 51. The charger 56 can control the current value of the power supplied to the power storage unit 54.

In the above-described embodiment, the forming device that performs expansion forming on the heated metal pipe material has been described. However, the type of the forming device is not particularly limited as long as the heated metal material is formed. In addition, in the above-described embodiment, the electric heating is performed inside the forming device, but the electric heating may be performed outside the forming device.

### Reference Signs List

- 53: switch
- 54: power storage unit
- 55: commercial power supply
- 100: forming system
- 101: electric heating unit
- 103: forming device (forming unit)
- 104: power supply unit

## Claims

1. A forming system comprising: a forming unit that forms a metal material that has been heated; and
a power supply unit that supplies power for heating the metal material,
wherein the power supply unit includes a power storage unit that stores the power, and
the power supply unit supplements the power from the power storage unit at a timing at which a peak of the power to be supplied is generated.

2. The forming system according to claim 1, further comprising: an electric heating unit that electrically heats the metal material,
wherein the power supply unit stores the power in the power storage unit at a timing at which the electric heating unit does not perform the electric heating, and supplies the power from the power storage unit to the electric heating unit at a timing at which the electric heating unit performs the electric heating.

3. The forming system according to claim 2, wherein the power supply unit stores the power in the power storage unit to average power consumption of a commercial power supply.

4. The forming system according to claim 1, wherein the power supply unit has a switch between a commercial power supply and the power storage unit, and stores the power in the power storage unit at a timing at which the switch is turned on.

5. The forming system according to claim 4, wherein the switch is disposed in a power supply device.

6. A forming system comprising: a forming unit that forms a metal material that has been heated; and
a power supply unit that supplies power for heating the metal material,
wherein the power supply unit includes a power storage unit that stores the power, and
the power supply unit supplements the power from the power storage unit such that power consumption of a commercial power supply is equal to or less than a limit value designated by an electric power company or a value based on a limit value of a power supply facility capacity of an installation factory.
